# EUROPEAN PATENT SPECIFICATION

(11) **EP 2 159 954 B1**
(45) Date of publication and mention of the grant of the patent: **14.05.2014**
(21) Application number: 07845995.5
(22) Date of filing: 20.12.2007
(51) Int. Cl.: H04L 12/14, G06Q 30/02, H04W 4/24

(54) **METHOD AND SYSTEM FOR CHARGING ACCORDING TO FLOW OF MBMS**
VERFAHREN UND SYSTEM ZUR VERGEBÜHRUNG GEMÄSS DEM FLUSS VON MBMS
PROCÉDÉ ET SYSTÈME POUR UNE FACTURATION EN FONCTION DU DÉBIT D'UN SERVICE MBMS

(30) Priority: 25.05.2007 CN 200710107308
(43) Date of publication of application: 03.03.2010
(73) Proprietor: ZTE Corporation, Shenzhen, Guangdong 518057 (CN)
(72) Inventor: LIU, Meiping, Guangdong 518057 (CN)
(74) Representative: Ilgart, Jean-Christophe
(86) International application number: PCT/CN2007/003702
(87) International publication number: WO 2008/144978

(56) References cited:
- WO-A1-2008/141503
- CN-A- 1 490 960
- CN-A- 1 620 016
- CN-A- 101 060 414

## Description

### Field of the Invention

The present invention relates to the field of multimedia broadcast/multicast service, in particular to a method and system for charging according to the flow of multimedia broadcast/multicast services (MBMS) while performing the mobile MBMS service.

### Background of the Invention

MBMS realizes a point to multi-points service that a data source sends data to a plurality of terminals. MBMS does not only realize the low rate multicast and broadcast for messages of plain text, but also the high rate multicast and broadcast for multimedia service. Based on the packet networks like WCDMA/TD-SCDMA/GSM(Wideband Code-Division Multiple Access/ Time Division-Synchronous Code Division Multiple Access/Global System for Mobile communication), MBMS adds the MBMS function to the existing packet switched domain function entities such as Serving GPRS Support Node (SGSN), Gateway General Support Node(GGSN), radio network controller(RNC), and user equipment (UE) by adding some new function entities like broadcast multicast service center(BM-SC), and redefines the new logic shared channels to realize the sharing of air interface resource.

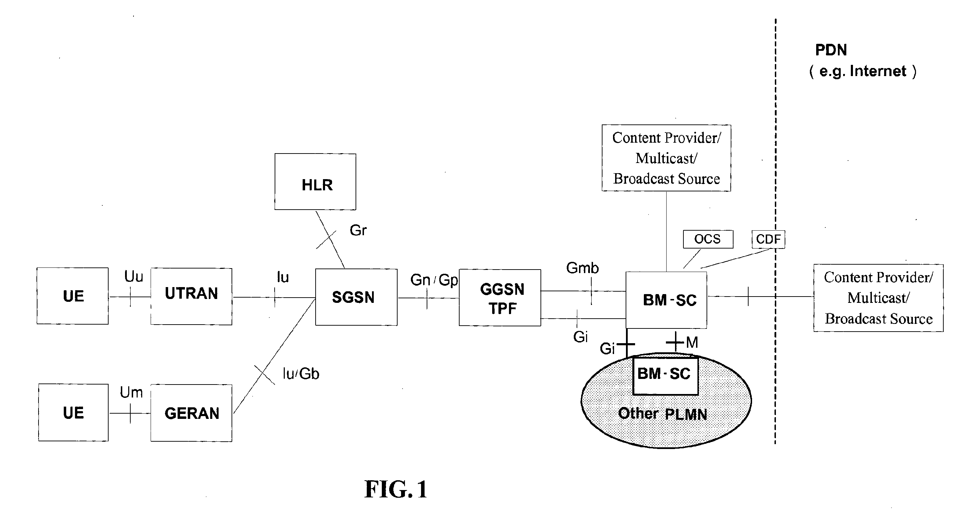

Figure 1 is the reference model of MBMS network, as shown in Figure 1, the BM-SC is connected with the GGSN through the interfaces of Gmb and Gi. A BM-SC can be connected with a plurality of GGSNs. The GGSN is connected with the SSGN through Gn/Gp interface. A GGSN can be connected with a plurality of SGSNs. The SGSN can be connected with Universal Mobile Telecommunications System(UMTS) Terrestrial Radio Access Network(UTRAN) through a Iu interface, and then the UTRAN can be connected with a mobile terminal through a Uu interface. The SGSN can also be connected with Global System for Mobile communication (GSM) Enhanced Radio Access Network(GERAN) through a Iu/Gb interface, and then the GERAN can be connected with mobile terminal through Um interface.

In prior art, the process of a terminal to receive the multicast service is shown as follows:
1. Subscription process, used for a terminal to subscribe the multicast service and set up the relationship between the terminal and a service provider;
2. Announcement process, used to announce to the terminal what services can be provided by the service provider, as well as related information of other services;
3. Joining process, used for the terminal to send request to a service network to join a multicast group;
4. Session Start process, used for a BM-SC to prepare to send data;
5. Notification process, used for a RNC to notify the terminal that MBMS multicast is about to start;
6. Data Transfer process, a process of multimedia data transmission of a terminal;
7. Session Stop, used for the BM-SC to indicate the session is ended and the bearer resources are released; and
8. Leaving process, a process that the terminal will not receive multimedia broadcasting and leave the multicast group.

The broadcast process of a terminal has no Joining and Leaving process of the multicast process, the other processes of the broadcast process are the same as those of the multicast process.

As to the multimedia broadcast or multicast service, the charging function is distributed on SGSN, GGSN, and BM-SC, wherein, SGSN and GGSN mainly realize the charging function of the bearer layer, while BM-SC realizes the charging function of service layer. The function entities with charging function generate charging requests and send them to Online Charging System/Charging Data Function entity (OCS/CDF) to realize the charging. Since both the multicast and broadcast services cannot ensure the receiving of the multimedia broadcast or multicast by a terminal, the charging performed by the SGSN, GGSN, and BM-SC cannot realize to charge according to the actual received flow of a terminal.

WO 2008141503 (priority date 24-05-2007, published 27-11-2008) discloses a method and system that can realize the charging according to the flow in mobile MBMS by sending a tag to the subscriber terminal to return the flow.

### Summary of the Invention

The present invention can provide a more abundant charging method for terminals, and can provide a terminal with an optional method for charging according to the flow. In addition, the present invention is more attractive to a terminal which does not use multicast service very often.

On one hand, the present invention provides a method for charging according to the flow of MBMS, which can include the following steps: Step 1, a Broadcast/Multicast Service Center, BM-SC, make a Service Announcement sent to a subscriber terminal carry data items indicating a service can be charged according to the flow; Step 2, if a subscriber selects to be charged according to the flow while subscribing a service, a tag which requests the said subscriber terminal to return the flow, and a payment mode of the said subscriber terminal are sent to the said subscriber terminal; Step 3, the subscriber terminal stores the flow information corresponding to the service while receiving the service, and sends a charging request to charging system in different policies according to the payment mode; and Step 4, the charging system charges according to the flow information.

Wherein, the payment mode includes prepaid and postpaid.

When the payment mode is prepaid, the policies include one of the followings: the subscriber terminal reports the flow information regularly in the process of service broadcasting or service receiving; and the subscriber terminal reports the flow information when the service broadcasting or the service receiving is ended.

When the payment mode is postpaid, the policies include: the subscriber terminal reports the flow information when the service broadcasting or the service receiving is ended.

The charging system includes Charging Data Function Entity (CDF), and Online Charging System (OCS), wherein, when the payment mode is repaid, the charging system is the OCS, when the payment mode is postpaid, the charging system is the CDF.

When the payment mode is prepaid, the Step 4 includes the following procedures: the OCS performs a real-time charging on the subscriber terminal; and if there is not enough fee of the subscriber terminal, the OCS reports to the BM-SC, the BM-SC obtains the subscription information of the subscriber terminal and prevents the subscriber terminal from continuing to receive the service; otherwise, the service will be continued.

When the payment mode is postpaid, the Step 4 includes the following procedures: the CDF performs a charging according to the flow information on the subscriber terminal.

In Step 3, the subscriber terminal sends the charging request through Gi interface to the charging system.

On the other hand, the present invention provides a system for charging according to the flow of MBMS, which can include: sending unit, located on a BM-SC, which is used for sending a Service Announcement which carries data items indicating a service can be charged according to the flow to a subscriber terminal; setting unit, which is used for setting a payment mode of the subscriber terminal and a tag which requests the subscriber terminal to return the flow, and sending the tag and the payment mode to the subscriber terminal when the subscriber terminal selects to be charged according to the flow in service subscription ; storage unit, located on the subscriber terminal, which is used for performing calculation of the flow and regularly storing the flow information corresponding to the service while receiving the service; flow sending unit, located on the subscriber terminal, which is used for sending the flow information regularly or when the service broadcasting or the service receiving is ended; and charging unit, which is used for charging according to the flow information according to the payment mode.

In addition, the system also includes: timer, located on the subscriber terminal, which is used for performing a timing for the storage of media content and sending the flow report.

Wherein, the payment mode includes prepaid and postpaid.

When the payment mode is prepaid, the charging unit is used for performing a real-time charging on the subscriber terminal, and notifying the subscriber terminal through the BM-SC or other means when there is not enough fee of the subscriber terminal. When the payment mode is postpaid, the charging unit is used for performing a charging according to the flow information on the subscriber terminal.

Furthermore, the subscriber terminal sends the charging request to the charging unit through anyone of the following means: sending to the charging unit through the BM-SC by Gi interface; sending to the charging unit through short message center and short message gateway in the form of a short message; and sending to the charging unit through the wireless application protocol. When the charging request is sent in the form of a short message, the subscriber terminal generates a short message and sends it through short message center, short message gateway, and BM-SC to OCS/CDF, or sends it through short message center, and short message gateway, directly to OCS/CDF without passing BM-SC.

Thus, according to the present invention, the flow of the multimedia service received by the terminal is calculated to realize a comparatively accurate charging according to the flow. As to the operators, the present invention can provide a more abundant charging method for terminals, and can provide a terminal with an optional method for charging according to the flow. In addition, the present invention is more attractive to a terminal which does not use multicast service very often.

The other characteristics and advantages of the invention will be illustrated hereinafter in the description and will partly become obvious or understood in the implementation of the invention. The objectives and other advantages of the invention can be realized and obtained through the structures indicated in the description, claims, and the accompanying drawings.

### Description of the Drawings

The accompanying drawings provide further understanding for the invention and form part of the invention. The preferred embodiment of the present invention is described for the purpose of illustration, not for limiting the present invention. In the accompanying drawings:
Fig. 1 is a schematic drawing of MBMS network structure according to the prior art;
Fig. 2 is a flow chart of the method for charging according to the flow of the MBMS according to the present invention;
Fig. 3 is a schematic drawing of the process of information release and subscription for a terminal in the method for charging according to the flow of MBMS according to the present invention;
Fig. 4 is a schematic drawing of the process of charging according to the flow for a terminal in the method for charging according to the flow of MBMS according to the present invention; and
Fig. 5 is a frame drawing of the system for charging according to the flow of MBMS according to the present invention.

### Detailed Description of the Invention

A detailed description is given to the preferred embodiments of the invention with reference to the accompanying drawings. The preferred embodiment of the present invention is described for the purpose of illustration, not for limiting the present invention.

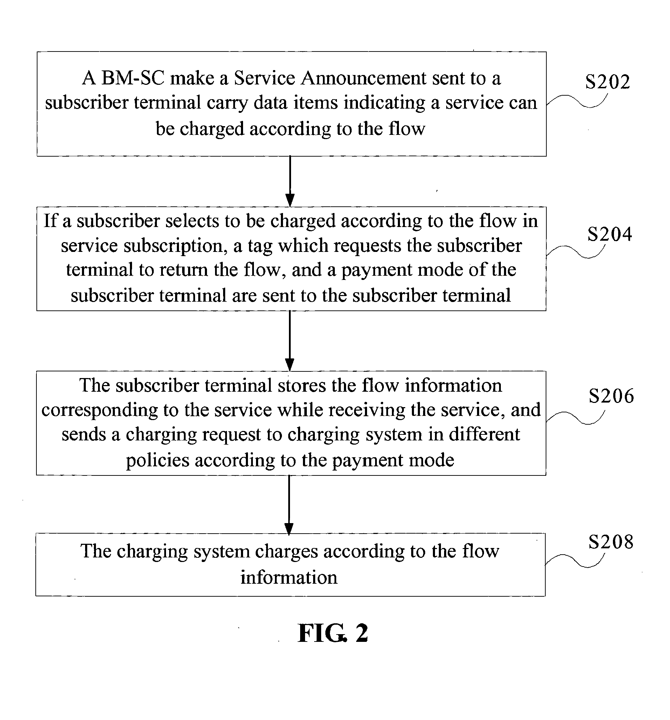

Fig. 2 is the flow drawing of the method for charging according to the flow of MBMS according to the present invention.

The method according to the present invention makes the BM-SC carry the information indicates that the mobile can be charged according to the flow in Service Announcement in a subscription, then a terminal can select the subscription by flow. If the terminal subscribes the service according to the flow, a mark of prepaid or postpaid will be returned in the BM-SC subscription response message. If the mark is of prepaid, the information of whether the flow information needs to be returned regularly and the timing will be carried. If no timing is selected, the flow information will be returned when the ending time of the broadcast arrives, like the postpaid situation. The terminal regularly stores information like the flow of content, timing, and content ID while watching the multicast content whose flow needs to be counted. The regular storage can ensure that the information the terminal recorded can approach the actual information of the content that the terminal has watched at the most in an unexpected shutdown and inaccessible circumstances of the terminal, so as to keep the information from being unrecorded caused by failing to record the information in time in an accident situation.

While receiving a request of flow information, BM-SC sends a charging request to OCS if the terminal is prepaid or to CDF if the terminal is postpaid. OCS/CDF performs an accurate flow charging on a terminal according to the charging type (charging according to the flow) as well as the concrete flow information.

As shown in Fig. 2, the method includes the following steps:
Step S202, a BM-SC make a Service Announcement sent to a subscriber terminal carry data items indicating a service can be charged according to the flow ;
Step S204, if a subscriber selects to be charged according to the flow while subscribing a service, a tag which requests the subscriber terminal to return the flow, and a payment mode of the subscriber terminal are sent to the subscriber terminal;
Step S206, the subscriber terminal stores the flow information corresponding to the service while receiving the service, and sends a charging request to charging system in different policies according to the payment mode; and
Step S208, the charging system charges according to the flow information.

Wherein, the payment mode includes prepaid and postpaid.

When the payment mode is prepaid, the policies include one of the followings: the subscriber terminal reports the flow information regularly in the process of service broadcasting or service receiving; and the subscriber terminal reports the flow information when the service broadcasting or the service receiving is ended.

When the payment mode is postpaid, the policies include: the subscriber terminal reports the flow information when the service broadcasting or the service receiving is ended.
the charging system includes CDF and OCS, wherein, when the payment mode is prepaid, the charging system is the OCS, when the payment mode is postpaid, the charging system is the CDF.

When the payment mode is prepaid, Step S208 includes the following procedures: the OCS performs a real-time charging on the subscriber terminal; and if there is not enough fee of the subscriber terminal, the OCS reports to the BM-SC, the BM-SC obtains the subscription information of the subscriber terminal and prevents the subscriber terminal from continuing to receive the service; otherwise, the service will be continued.

When the payment mode is postpaid, Step S208 includes the following procedures: the CDF performs a charging according to the flow information on the subscriber terminal.

In Step S206, the subscriber terminal sends the charging request through Gi interface to the charging system.

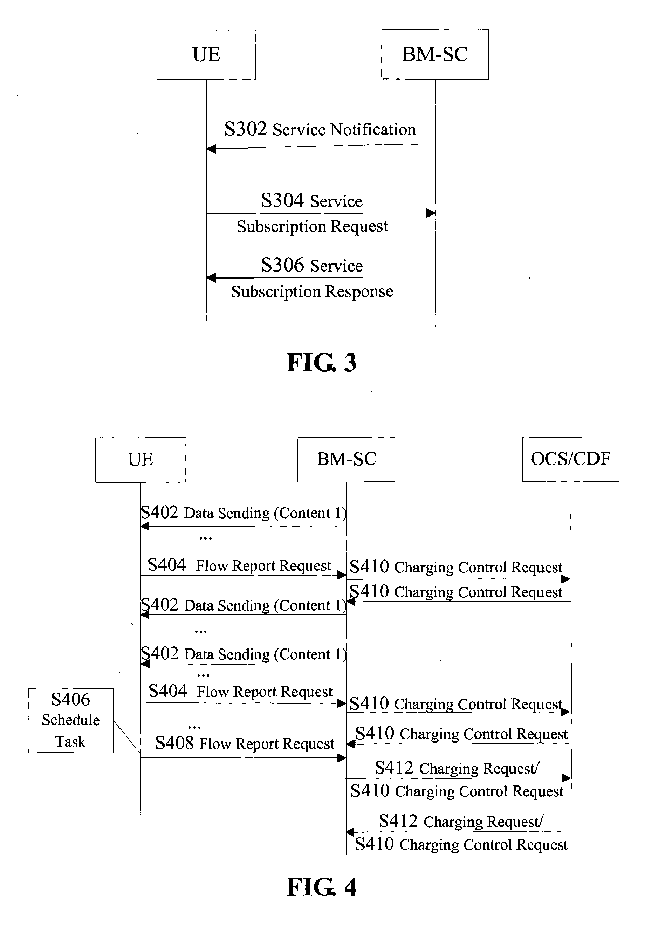

Fig. 3 shows the information release and subscription of the terminal in the method for charging according to the flow of MBMS. Fig. 3 shows the process of information release and subscription of the terminal, which is available in all the processes of the concrete realization of the present MBMS technologies. But the present invention expands the present process. As shown in Fig.3, the concrete improvement process is shown as follows:
Step S302, BM-SC sends Service Announcement to the terminal. According to the present protocol, the Service Announcement can be realized by either MBMS broadcast/multicast or point-to-point short message, community broadcast short message, HTTP, WAP PUSH etc. The information in the Service Announcement currently is packed according to the ESG method of OMA BCAST. Wherein, in order to realize the function of charging according to the flow, it is needed to notify that the terminal can select to be charged according to the flow or other in the Service Announcement;
Step S304, upon receiving the Service Announcement, the terminal can perform the service subscription according to the information in the Service Announcement, and sends subscription request to BM-SC. Of course, the terminal can select BM-SC to provide the customer service system, so as to realize the subscription process manually or through other methods; and
Step S306, BM-SC receives the subscription request from the terminal, then carries a tag which requests the terminal to return the flow as well as the payment attribution (prepaid or postpaid) of the terminal in the subscription response if the terminal selects to be charged according to the flow; if the payment attribution (or payment mode) is prepaid, BM-SC also carries the policy for returning the flow that is set by BM-SC.

Wherein, the policy is divided into two kinds: 1. Send flow report requests regularly(the timing is also set by BM-SC) in the content watch; 2. Send report request at the end of the receiving or the broadcasting of the watched content, the terminal needs to store the tags obtained in the subscription response.

The concrete flow for charging according to the flow of the terminal is shown in Fig. 4, including the following procedures:
S402, select to watch content or download files, and receive the media stream or data files from BM-SC, wherein, according to the stored flow charging parameter, the terminal calculates and sums up the flow, stores the summed flow in the flow calculator if the charging according to the flow is needed; the terminal integrates the timing into timing task if the regular returning is needed.
S404, when the timing for the schedule task of sending flow report requests of the UE arrives (regular report under prepaid condition), the flow report requests will be generated and sent to BM-SC, as the counter for counting the flow will be cleared; a plurality of data streams or media files are often received during the timing; these media streams or data files need to be summed up, a flow report is sent when the time of the timer is up; then the flow timer is reset to zero when a flow report is sent successfully;
S406, as to a postpaid terminal, the flow report is chosen to be sent when the whole file is received or the watched media stream content of the terminal is ended, which can reduce the number of flow reports sent by the UE to the BM-SC; in order to avoid the condition that the terminal stops watching the content or file before they are finished, a timer needs to be set; the timing for the timer is the time the data file supposed to be finished or the finishing time of the content stream; the flow counter starts with zero at the beginning of content receiving or data watching, then sums up the flow when a data file or stream is received.
S408, a report for watching the whole data file or content stream is generated and sent to BM-SC when the timing of the timer in S406 is up;
S410, BM-SC receives the flow report requests(for prepaid terminal) sent by UE, sends the credit control request to the OCS, then the OCS performs real-time charging on the UE; if there's not enough fee of the terminal, the OCS sends a credit control response which indicate that there is not enough fee of the terminal to the BM-SC, then the BM-SC obtains the subscription information of terminal and modifies it to mark that the fee of the terminal is not enough, the terminal will no longer be able to receive the multimedia content; if the fee of the terminal is enough, the multimedia service will be continued; and
S412, BM-SC sends the charging request to CDF if the terminal is postpaid. CDF performs charging on the terminal according to the flow information carried by BM-SC.

Consequently, the invention realizes the accurate charging according to the flow through the improvement of the exchanging information of the Gi interface and modification to the terminal, BM-SC, and OCS/CDF. The modification to the terminals includes the recognition to the subscription response message (recording prepaid or postpaid indication, whether charging according to the flow is needed, when the terminal is prepaid, the flow information is sent regularly (set time), or, just like the postpaid situation, sent when content watching is ended). The flow information for a watched program is stored until the flow information request according to the flow sending policy is sent to BM-SC. As to the modification to BM-SC, the subscription response needs to be modified. When the flow information request from BM-SC is received, the charging information request (flow information) is forwarded to CDF or OCS. As to the modification to CDF/OCS, the function of accurate charging according to the flow on a terminal is added.

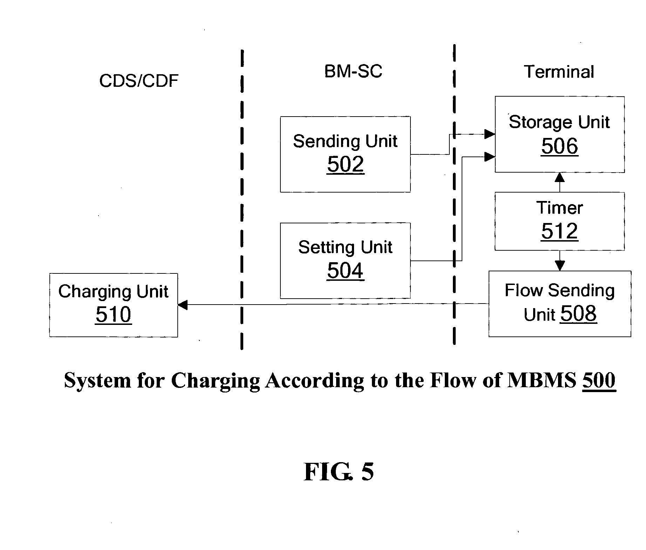

Fig. 5 is a frame drawing of the system for charging according to the flow of MBMS according to the present invention. As shown in Fig. 5, the system includes: sending unit 502, located on a BM-SC, which is used for sending to a subscriber terminal a Service Announcement carrying data items indicating a service can be charged according to the flow; setting unit 504, which is used for setting a tag which requests the subscriber terminal to return the flow and a payment mode of the subscriber terminal, and sending the tag and the payment mode to the subscriber terminal when the subscriber terminal selects to be charged according to the flow in service subscription ; storage unit 506, located on the subscriber terminal, which is used for performing calculation of the flow and regularly storing the flow information corresponding to the service while receiving the service; flow sending unit 508, located on the subscriber terminal, which is used for sending the flow information regularly or when the service broadcasting or the service receiving is ended; and charging unit 510, which is used for charging according to the flow information according to the payment mode.

In addition, the system for charging according to the flow of MBMS also includes: timer 512, located on the subscriber terminal, which is used for performing a timing for the storage of media content and flow sending report.

Wherein, the payment mode includes prepaid and postpaid.

When the payment mode is prepaid, the charging unit 510 is used for performing a real-time charging on the subscriber terminal, and notifying the subscriber terminal through the BM-SC or other means when there is not enough fee of the subscriber terminal. When the payment mode is postpaid, the charging unit 510 is used for performing a charging according to the flow information on the subscriber terminal.

Furthermore, the subscriber terminal sends the charging request through Gi interface to the charging unit; or with a short message through a short message center, a short message gateway to the charging unit; or with a short message through a short message center, a short message gateway and a BM-SC to the charging unit; or through the wireless application protocol (WAP) to BM-SC.

Thus, according to the present invention, the flow of the multimedia service received by the terminal is calculated to realize a comparatively accurate charging according to the flow. As to the operators, the present invention can provide a more abundant charging method for terminals, and can provide a terminal with an optional method for charging according to the flow. In addition, the present invention is more attractive to a terminal which does not often use multicast service.

The preferred embodiment of the present invention is described for the purpose of illustration, not for limiting the present invention. For those skilled in the art, it is obvious that various alterations and modifications can be made to the present invention. Any alterations, substitutions and modifications falling into the principle of the present invention will fall within the scope of the present invention.

## Claims

1. A method for charging according to the flow of Multimedia Broadcast Multicast Service, MBMS, **characterized in that** the method includes the following steps:
Step 1, a Broadcast/Multicast Service Center, BM-SC, make a Service Announcement sent to a subscriber terminal carrying data items indicating that a service can be charged according to the flow;
Step 2, if a subscriber selects to be charged according to the flow while subscribing a service, a tag which requests the said subscriber terminal to return the flow, and a payment mode of the said subscriber terminal are sent to the said subscriber terminal;
Step 3, the said subscriber terminal stores the flow information corresponding to the said service while receiving the said service, and sends a charging request to charging system in different policies according to the said payment mode; and
Step 4, the said charging system charges according to the said flow information.

2. The method according to claim 1, **characterized in that** the said payment mode includes prepaid and postpaid.

3. The method according to claim 2, **characterized in that** when the said payment mode is the said prepaid, the said policies include one of the followings prepaid:
the said subscriber terminal reports the said flow information regularly in the process of service broadcasting or service receiving; and
the said subscriber terminal reports the said flow information when the service broadcasting or the service receiving is ended.

4. The method according to claim 2, **characterized in that** when the said payment mode is the said postpaid, the said policies include postpaid:
the said subscriber terminal reports the said flow information when the service broadcasting or the service receiving is ended.

5. The method according to claim 2, **characterized in that** the said charging system includes Charging Data Function Entity, CDF, and Online Charging System, OCS, wherein, when the said payment mode is the said prepaid, the said charging system is the said OCS, when the said payment mode is the said postpaid, the said charging system is the said CDF.

6. The method according to claim 5, **characterized in that** when the said payment mode is the said prepaid, the said Step 4 includes the following procedures:
the said OCS performs a real-time charging on the said subscriber terminal; and
if there is not enough fee of the said subscriber terminal, the said OCS reports to the said BM-SC, the said BM-SC obtains the subscription information of the said subscriber terminal and prevents the said subscriber terminal from continuing to receive the said service; otherwise, the said service will be continued.

7. The method according to claim 5, **characterized in that** when the said payment mode is the said postpaid, the said Step 4 includes the following procedures:
the said CDF performs a charging according to the said flow information on the said subscriber terminal.

8. The method according to any of the preceding claims 1 to 7, **characterized in that** in the said Step 3, the said subscriber terminal sends the said charging request through Gi interface to the said charging system.

9. A system for charging according to the flow of Multimedia Broadcast Multicast Service, MBMS, **characterized in that** the system includes:
sending unit, located on a BM-SC, which is used for sending a Service Announcement which carries data items indicating that a service can be charged according to the flow to a subscriber terminal ;
setting unit, which is used for setting a payment mode of the said subscriber terminal and a tag which requests the said subscriber terminal to return the flows, and sending the said tag and the said payment mode to the said subscriber terminal when the said subscriber terminal selects to be charged according to the flow in service subscription ;
storage unit, located on the said subscriber terminal, which is used for performing calculation of the flow and regularly storing the flow information corresponding to the said service while receiving the said service;
flow sending unit, located on the said subscriber terminal, which is used for sending the said flow information regularly or when the service broadcasting or the service receiving is ended; and
charging unit, which is used for charging according to the said flow information according to the said payment mode.

10. The system according to claim 9, **characterized in that** the system also includes:
timer, located on the said subscriber terminal, which is used for performing a timing for storage of media content and sending the flow report.

11. The system according to claim 9 or 10, **characterized in that** the said payment mode includes prepaid and postpaid.

12. The system according to claim 11, **characterized in that** when the said payment mode is the said prepaid, the said charging unit is used for performing a real-time charging on the said subscriber terminal, and notifying the said subscriber terminal through the said BM-SC or other means when there is not enough fee of the said subscriber terminal.

13. The system according to claim 11, **characterized in that** when the said payment mode is the said postpaid, the said charging unit is used for performing a charging according to the said flow information on the said subscriber terminal.

14. The system according to any of the claims 9 to 13, **characterized in that** the said subscriber terminal sends the said charging request to the said charging unit through anyone of the following means:
sending to the said charging unit through the said BM-SC by Gi interface;
sending to the said charging unit through short message center and short message gateway in the form of a short message; and
sending to the said charging unit through the wireless application protocol.

## Patentansprüche

1. Verfahren zur Gebührenerhebung gemäß dem Fluss eines Multimedia Broadcast Multicast Service, MBMS, **dadurch gekennzeichnet, dass** das Verfahren die folgenden Schritte enthält:
Schritt 1: ein Broadcast/Multicast-Dienstezentrum (Broadcast/Multicast Service Center), BM-SC, erstellt eine an ein Anschlussinhaber-Endgerät gesendete Dienstankündigung (Service Announcement), welche Datenelemente transportiert, die angeben, dass für einen Dienst Gebühren gemäß dem Fluss erhoben werden können;
Schritt 2: falls ein Anschlussinhaber während des Abonnierens eines Dienstes wählt, dass Gebühren gemäß dem Fluss zu erheben sind, , werden ein Kennzeichen, welches das Anschlussinhaber-Endgerät dazu auffordert, den Fluss zurückzugeben, und eine Bezahlmethode des Anschlussinhaber-Endgeräts an das Anschlussinhaber-Endgerät gesendet;
Schritt 3: das Anschlussinhaber-Endgerät speichert die Flussinformation entsprechend dem Dienst, während der Dienst empfangen wird, und sendet eine Gebührenerhebungsaufforderung an ein Gebührenerhebungssystem mit verschiedenen Richtlinien gemäß der Bezahlmethode; und
Schritt 4: das Gebührenerhebungssystem rechnet gemäß der Flussinformation ab.

2. Verfahren nach Anspruch 1, **dadurch gekennzeichnet, dass** die Bezahlmethode Bezahlen im Voraus oder Bezahlen im Nachhinein enthält.

3. Verfahren nach Anspruch 2, **dadurch gekennzeichnet, dass**, wenn die Bezahlmethode das Bezahlen im Voraus ist, die Richtlinie eine der folgenden Bezahlungen im Voraus enthält:
das Anschlussinhaber-Endgerät berichtet die Flussinformation regelmäßig im Verlauf der Diensteausstrahlung oder des Diensteempfanges; und
das Anschlussinhaber-Endgerät berichtet die Flussinformation, wenn die Diensteausstrahlung oder der Diensteempfang beendet wird.

4. Verfahren nach Anspruch 2, **dadurch gekennzeichnet, dass**, wenn die Bezahlmethode das Bezahlen im Nachhinein ist, die Richtlinie Bezahlen im Nachhinein enthält:
das Anschlussinhaber-Endgerät die Flussinformation berichtet, wenn die Diensteausstrahlung oder der Diensteempfang beendet wird.

5. Verfahren nach Anspruch 2, **dadurch gekennzeichnet, dass** das Gebührenerhebungssystem eine Gebührenerhebungsdatenfunktionseinheit (Charging Data Function Entity), CDF, und ein Online-Gebührenerhebungssystem (Online Charging System), OCS, enthält, wobei, wenn die Bezahlmethode das Bezahlen im Voraus ist, das Gebührenerhebungssystem das OCS ist, wenn die Bezahlmethode das Bezahlen im Nachhinein ist, das Gebührenerhebungssystem die CDF ist.

6. Verfahren nach Anspruch 5, **dadurch gekennzeichnet, dass**, wenn die Bezahlmethode das Bezahlen im Voraus ist, der Schritt 4 die folgenden Vorgänge enthält:
das OCS führt Echtzeitgebührenerhebung des Anschlussinhaber-Endgeräts durch; und
falls nicht genügend Entgelt des Anschlussinhaber-Endgeräts vorhanden ist, berichtet das OCS an das BM-CS, erhält das BM-CS die Abonnementinformation des Anschlussinhaber-Endgeräts und hindert das Anschlussinhaber-Endgerät am Fortsetzen des Empfangs des Dienstes; andernfalls wird der Dienst fortgesetzt.

7. Verfahren nach Anspruch 5, **dadurch gekennzeichnet, dass**, wenn die Bezahlmethode das Bezahlen im Nachhinein ist, der Schritt 4 die folgenden Vorgänge enthält:
die CDF führt eine Gebührenerhebung gemäß der Flussinformation des Anschlussinhaber-Endgeräts durch.

8. Verfahren nach einem der vorhergehenden Ansprüche 1 bis 7, **dadurch gekennzeichnet, dass** in dem Schritt 3 das Anschlussinhaber-Endgerät die Gebührenerhebungsaufforderung über eine Gi-Schnittstelle an das Gebührenerhebungssystem sendet.

9. System zur Gebührenerhebung gemäß dem Fluss eines Multimedia Broadcast Multicast Service, MBMS, **dadurch gekennzeichnet, dass** das System enthält:
eine Sendeeinheit, die sich auf einem BM-SC befindet, welche zum Senden einer Dienstankündigung (Service Announcement) an ein Anschlussinhaber-Endgerät verwendet ist, welche Datenelemente transportiert, die angeben, dass für einen Dienst Gebühren gemäß dem Fluss erhoben werden können;
Einstellungseinheit, welche zum Einstellen einer Bezahlmethode des Anschlussinhaber-Endgeräts und eines Kennzeichens, welches das Anschlussinhaber-Endgerät dazu auffordert, den Fluss zurückzugeben, und Senden des Kennzeichens und der Bezahlmethode an das Anschlussinhaber-Endgerät, wenn das Anschlussinhaber-Endgerät beim Abonnement des Dienstes wählt, dass Gebühren gemäß dem Fluss zu erheben sind, verwendet ist;
Speichereinheit, die sich auf dem Anschlussinhaber-Endgerät befindet, welche zum Durchführen einer Berechnung des Flusses und regelmäßigen Speichern der Flussinformation entsprechend dem Dienst verwendet ist, während der Dienst empfangen wird;
Flusssendeeinheit, die sich auf dem Anschlussinhaber-Endgerät befindet, welche zum regelmäßigen Senden der Flussinformation oder zum Senden der Flussinformation, wenn die Diensteausstrahlung oder der Diensteempfang beendet wird, verwendet ist; und
eine Gebührenerhebungsseinheit, welche zur Gebührenerhebung gemäß der Flussinformation in Übereinstimmung mit der Bezahlmethode verwendet ist.

10. System nach Anspruch 9, **dadurch gekennzeichnet, dass** das System ebenfalls enthält:
einen Taktgeber, der sich auf dem Anschlussinhaber-Endgerät befindet, welcher zum Durchführen einer Taktung zur Speicherung von Medieninhalten und Senden des Flussberichts verwendet ist.

11. System nach Anspruch 9 oder 10, **dadurch gekennzeichnet, dass** die Bezahlmethode Bezahlen im Voraus oder Bezahlen im Nachhinein enthält.

12. System nach Anspruch 11, **dadurch gekennzeichnet, dass**, wenn die Bezahlmethode das Bezahlen im Voraus ist, die Gebührenerhebungseinheit zum Durchführen einer Echtzeitgebührenerhebung des Anschlussinhaber-Endgeräts und Benachrichtigen des Anschlussinhaber-Endgeräts über das BM-SC oder andere Mittel verwendet ist, wenn nicht genügend Entgelt des Anschlussinhaber-Endgeräts vorhanden ist.

13. System nach Anspruch 11, **dadurch gekennzeichnet, dass**, wenn die Bezahlmethode das Bezahlen im Nachhinein ist, die Gebührenerhebungseinheit zum Durchführen einer Gebührenerhebung gemäß der Flussinformation des Anschlussinhaber-Endgerät verwendet ist.

14. System nach einem der Ansprüche 9 bis 13, **dadurch gekennzeichnet, dass** das Anschlussinhaber-Endgerät die Gebührenerhebungsaufforderung an die Gebührenerhebungseinheit über eines der nachfolgenden Mittel sendet:
Senden an die Gebührenerhebungseinheit über das BM-SC mittels einer Gi-Schnittstelle;
Senden an die Gebührenerhebungseinheit über einen Kurznachrichtensender und ein Kurznachrichtengateway in der Form einer Kurznachricht;
Senden an die Gebührenerhebungseinheit über das Drahtlosanwendungsprotokoll.

## Revendications

1. Méthode de facturation selon le flux de service de diffusion multidiffusion multimédia, MBMS, **caractérisée en ce que** la méthode inclut les étapes suivantes :
étape 1, un centre de service de diffusion/multidiffusion, BM-SC, fait une annonce de service envoyée à un terminal abonné portant des articles de données indiquant qu'un service peut être facturé selon le flux ;
étape 2, si un abonné choisit d'être facturé selon le flux tout en s'abonnant à un service, une étiquette qui demande audit terminal abonné de renvoyer le flux, et un mode de paiement dudit terminal abonné sont envoyés audit terminal abonné ;
étape 3, ledit terminal abonné stocke les informations de flux correspondant audit service tout en recevant ledit service, et envoie une demande de facturation à un système de facturation en différentes polices selon ledit mode de paiement ; et
étape 4, ledit système de facturation impute selon lesdites informations de flux.

2. Méthode selon la revendication 1, **caractérisée en ce que** ledit mode de paiement inclut prépayé et post-payé.

3. Méthode selon la revendication 2, **caractérisée en ce que** lorsque ledit mode de paiement est ledit prépayé, lesdites polices incluent au moins l'un des prépayés suivantes :
ledit terminal abonné rend compte desdites informations de flux régulièrement dans le procédé de diffusion de service ou de réception de service ; et
ledit terminal abonné rend compte desdites informations de flux lorsque la diffusion de service ou la réception de service est conclue.

4. Méthode selon la revendication 2, **caractérisée en ce que** lorsque ledit mode de paiement est ledit post-payé, lesdites polices incluent post-payé :
ledit terminal abonné rend compte desdites informations de flux lorsque la diffusion de service ou la réception de service est conclue.

5. Méthode selon la revendication 2, **caractérisée en ce que** ledit système de facturation inclut une entité de fonction de données de facturation, CDF, et un système de facturation en ligne, OCS, dans laquelle, lorsque ledit mode de paiement est ledit prépayé, ledit système de facturation est ledit OCS, lorsque ledit mode de paiement est ledit post-payé, ledit système de facturation est ledit CDF.

6. Méthode selon la revendication 5, **caractérisée en ce que** lorsque ledit mode de paiement est ledit prépayé, ladite étape 4 inclut les procédures suivantes :
ledit OCS réalise une facturation en temps réel sur ledit terminal abonné ; et
s'il n'y a pas assez de provision dans ledit terminal abonné, ledit OCS en rend compte audit BM-SC, ledit BM-SC obtient les informations d'abonnement dudit terminal abonné et empêche ledit terminal abonné de continuer à recevoir ledit service ; sinon, ledit service sera continué.

7. Méthode selon la revendication 5, **caractérisée en ce que** lorsque ledit mode de paiement est ledit post-payé, ladite étape 4 inclut les procédures suivantes :
ledit CDF réalise une facturation selon lesdites informations de flux sur ledit terminal abonné.

8. Méthode selon l'une quelconque des revendications 1 à 7, **caractérisée en ce que** dans ladite étape 3, ledit terminal abonné envoie ladite demande de facturation par l'intermédiaire d'une interface Gi audit système de facturation.

9. Système de facturation selon le flux de service de diffusion multidiffusion multimédia, MBMS, **caractérisé en ce que** le système inclut :
une unité d'envoi, située sur un BM-SC, qui est utilisée pour envoyer une annonce de service qui porte des articles de données indiquant qu'un service peut être facturé selon le flux à un terminal abonné ;
une unité d'établissement, qui est utilisée pour établir un mode de paiement dudit terminal abonné et une étiquette qui demande audit terminal abonné de renvoyer les flux, et envoyer ladite étiquette et ledit mode de paiement audit terminal abonné lorsque ledit terminal abonné choisit d'être facturé selon le flux en abonnement de service ;
une unité de stockage, située sur ledit terminal abonné, qui est utilisée pour réaliser un calcul du flux et stocker régulièrement les informations de flux correspondant audit service tout en recevant ledit service ;
une unité d'envoi de flux, située sur ledit terminal abonné, qui est utilisée pour envoyer lesdites informations de flux régulièrement ou lorsque la diffusion de service ou la réception de service est conclue ; et
une unité de facturation, qui est utilisée pour imputer selon lesdites informations de flux selon ledit mode de paiement.

10. Système selon la revendication 9, **caractérisé en ce que** le système inclut également :
un minuteur, situé sur ledit terminal abonné, qui est utilisé pour réaliser un minutage du stockage du contenu multimédia et envoyer le compte rendu de flux.

11. Système selon la revendication 9 ou 10, **caractérisé en ce que** ledit mode de paiement inclut prépayé et post-payé.

12. Système selon la revendication 11, **caractérisé en ce que** lorsque ledit mode de paiement est ledit prépayé, ladite unité de facturation est utilisée pour réaliser une facturation en temps réel sur ledit terminal abonné, et notifier ledit terminal abonné par l'intermédiaire dudit BM-SC ou d'autres moyens lorsqu'il n'y a pas assez de provision dans ledit terminal abonné.

13. Système selon la revendication 11, **caractérisé en ce que** lorsque ledit mode de paiement est ledit post-payé, ladite unité de facturation est utilisée pour réaliser une facturation selon lesdites informations de flux sur ledit terminal abonné.

14. Système selon l'une quelconque des revendications 9 à 13, **caractérisé en ce que** ledit terminal abonné envoie ladite demande de facturation à ladite unité de facturation par l'intermédiaire de l'un quelconque des moyens suivantes :
envoi à ladite unité de facturation par l'intermédiaire dudit BM-SC par une interface Gi ;
envoi à ladite unité de facturation par l'intermédiaire d'un centre de minimessages et une passerelle de minimessages sous la forme d'un minimessage ; et
envoi à ladite unité de facturation par l'intermédiaire du protocole d'application sans fil.
